# EUROPEAN PATENT SPECIFICATION

(11) **EP 0 915 039 B1**
(45) Date of publication and mention of the grant of the patent: **05.11.2003**
(21) Application number: 98116281.1
(22) Date of filing: 28.08.1998
(51) Int. Cl.: B65G 17/32, B65B 19/10

(54) **Band conveyor device for groups of delicate rod-shaped objects, in particular in packing machines or similar**
Förderbandeinrichtung für empfindliche stabförmige Gegenstände , insbesondere in Verpackungsmaschinen oder dergleichen.
Agencement d'une bande transporteuse pour des groupes d'objets délicats en forme de barre, spécialement pour machines d'emballage ou similaire

(30) Priority: 16.09.1997 IT SV970041
(43) Date of publication of application: 12.05.1999
(73) Proprietor: SASIB S.p.A., 40128 Bologna (IT)
(72) Inventor: Spada, Valter, 40043 Marzabotto (Bo) (IT); Briano, Bernardo, 17100 Savona (IT)
(74) Representative: Karaghiosoff, Giorgio Alessandro, Dott.

(56) References cited:
- EP-A- 0 668 214
- US-A- 3 707 219

## Description

The invention relates to a conveyor band device for groups of delicate rodshaped objects, in particular in packing machines or similar, said device comprising:
- a continuous conveyor band which rotates around snub pulleys, of which at least one is motorized,
- a plurality of substantially tubular housings being mounted on said band,
- each housing or each part of the same has both coupling means to the band in the direction of drive, that is parallel to the band, as well as separate means to hold or lock the housings or the parts of the housings on the band substantially in perpendicular direction to the conveyor band and which are prevalently non substantially stressed in the direction of travel.

Conveyor devices of this type are known from the document EP-A- 0 668 214 and are used above of all on cigarette packing machines. On the known conveyor devices of above-mentioned type, the tubular housings are fixed on conveyor bands made out of elastic materials such as rubber which is coated and/or embodies a carrying structure, as for example threads of metal, of fabric or other material and of combinations of different materials. The fastening is generally done by means of passing elements like screws, bolts, or similar which run through the band from one side to the other. This is being clamped between the facing side of the tubular housing and a stop as for example a nut screw on the opposite face (that is the internal one) of the band. This construction has defects which are mainly tied to the considerable operating speed and to the high precision required especially on the cigarette packing machines.
In operating conditions working at speed, the conveyor with the tubular housings is made to advance in very fast steps and is consequently subject to constant fast deceleration and acceleration. In these conditions, the inertia of the single tubular housings is discharged only on the bolts fixing the same to the band and can cause on the long run an early wear and a corresponding early loosening of the housings fixed on the band with a consequent loss of the precision and with an incremental progressive effect of the wear of the fixing means and of the loosening of the tubular housings. The wear is prevalently encountered at the level of the conveyor band and in order to guarantee a sufficiently long life to the conveyor device of this type, relatively sturdy and appropriately strengthened bands are used at present, with the corresponding cost increase.

To at least partly prevent the above-mentioned early wear in some type of the devices, as for example in the said document EP 668214, the internal face of the band has in correspondence to the through hole of each clamping bolt a tooth, a rib, or similar and between the clamping nut screw and the said bolt or the said rib is foreseen a small spacing plate with a groove shaped complementary to said projection or to said rib. However also in this case, the inertia of the tubular housing is directly discharged on the screws and on the bolts which will progressively attack and wear the through hole in the conveyor band. The rib or the projection and the associated small plate of interposition slow down slightly the progression of the wear of the through hole, but do not eliminate the defects.

In all the known types of devices, if one wants to obtain the best performances and the greater life it is necessary to be very precise with regards to the clamping force of the band between the nut screws or the small plates of interposition. This means that during assembly it is necessary to take great care, thus this phase requires more time and is relatively critical with regards to potential errors.

The invention is consequently based on the problem to make. a band conveyor device for groups of delicate rodshaped objects, in particular on packing machines or similar, in such a way as to allow for, at lower costs, a better and longer lasting coupling between the band and the tubular housings.

The invention attains the above-mentioned aims with the fact that at least one wall of continuous or discontinuous coupling protrudes from the internal face of the conveyor band and engages with a corresponding coupling surface of the tubular housing or part of same.

The coupling surface can extend itself for a large part of the width of the band.

Advantageously the coupling surface for each housing is formed by a transversal rib, a projecting ridge or a tooth and which is integral with the external surface of the conveyor band, while each housing or part of same, intended to act together with said projection, the said rib or the said tooth has a complementary seating groove for said projection, said rib or said tooth.

The tooth, the rib, or similar can be made in one piece or can be formed by inserted elements.

In a preferred form of execution, said projection, said tooth or said rib are foreseen coinciding with a tooth, a projection, a rib or similar on the internal face of the band, thanks to which the actual band engages at least with the grooved drive pulley.

According to one perfectioning, the driving tooth, projection or rib of the tubular housings are inserted and are formed by a small plate substantially of rectangular shape fixed previously on the band in a preset position. in particular in the position coinciding with a meshing rib, tooth, projection or similar on the internal surface of the actual band, while each tubular housing or part of the same has a groove complimentary with said small plate on the bearing surface of the conveyor band and while the clamping means of the tubular housings or part of same in the perpendicular direction to the band are integrated with the actual small plates and/or with the clamping means of the same.

The small driving plate and the grooves seating the same in the tubular housings or in the parts forming the same are dimensioned in such a way and with such tolerances, whereby the small driving plates engage for coupling in a matter of fit or slight force in the associated grooves.

The clamping of the small plates is carried out advantageously thanks to tubular rivets which lock the band between the small plate and a small counter-plate on the internal side of the same.

In order to guarantee always the same force of compression of the band between the small driving plates of the tubular housings amd the corresponding small counter-plates, the tubular bushings have in the middle zone a radial enlargement with an external diameter greater than the diameter of the through holes in the small driving plates and in the small counter-plates while the extremities which can be deformed by riveting and which go through said holes are correspondingly tapered, the internal diameter being substantial instead of constant, and the axial extension of the enlarged middle part being substantially equivalent to the thickness of the conveyor band in the clamping area of the small driving plates or slightly inferior according to the desired clamping pressure.

The clamping means of the tubular housings or part of the same are constituted in this case by threaded bolts which engage in the threaded central holes of the tubular clamping rivets of the corresponding small driving plate.

According to a further feature, the tubular housings or the parts forming the same are shaped on the side facing the conveyor band in such a way as to present stop surfaces with the small driving plates and external lateral surfaces which overlap with the corresponding lateral edges of the band.

Furthermore, in correspondence to the lateral edges of the band, the tubular housings or the parts of the same have surfaces of contact with the peripheral lateral longitudinal bands of the external face of the band.

When the small driving plates are foreseen to coincide with the teeth, projections or ribs on the internal face of the conveyor band, it is possible in this case for the small counter-plates to be correspondingly shaped or rather equipped with a groove with a section being complementary with an eventual self-centering function.

According to a further feature, the clamping screws of the tubular housings or of the separate parts forming the same, do not cooperate with housings opened at the bottom end of said housings. This allows to keep the internal surface of the tubular housings perfectly flat and smooth, that is substantially devoid of upward projections, roughness, or steps, on which the cigarettes slide during their introduction, avoiding these to get stuck. For this purpose, the through hole engaging the screws is formed by a transversal slot which opens into a chamber provided in the thickness of the coupling wall with the conveyor band and which slot has in an offset position with regards to the threaded hole of the tubular rivet an enlarged introductory extremity for the enlarged head of the screw or bolt, while it narrows in directon of the other extremity, or rather of the threaded hole of the tubular rivet forming a holding surface in form of an undercut with which the head of the screw or similar engages.

Advantageously, the head of the screw is of the so-called socket head type, that is it has an axial keyhole, not round, to engage a screwing tool, and said keyhole is accessible from the outside of the seating chamber of the head through a small hole coinciding with the same.

Advantageously, the head of the screw does not directly engage with the undercut holding surface which laterally delimits the narrowed area of the slot, but by means of an element of interposition with the function of a washer, or similar, which has a diameter substantially corresponding to the one of the screw head, preferably slightly larger than the one of the screw head, but smaller than the opening leading into the seating chamber and which is equipped with a central hole and a countersunk cavity for the screw head, as well as an anti-rotation appendix, not round, in form of a diametral or radial rib with a width substantially corresponding to the width of the narrow part of the slot and which is meant to engage in the same in a clamping condition of the tubular housing or the corresponding part of the same.

According to the above-mentioned the advantages of the present invention become evident. Thanks to the projections, to the teeth or the ribs on the external face of the conveyor band, the driving force is transferred to the housings or to the parts forming the same by the corresponding transversal frontal surfaces, whereby the inertia due to the considerable acceleration and deceleration is no longer discharged on the clamping means of the tubular housings or on parts of the same, and more precisely on the indivual through rivets. The teeth, the projections and the ribs can have considerable lengths with regards to the overall width of the band, the use of a small driving plate, preferably of metal or of plastic material, in combination with the tubular clamping rivets having an enlarged middle limiting the clamping compression of the band allows to lock the small driving plates on the actual band with the correct and constant compression of the latter. The clamping force of the band is always constant and at optimum levels. The slight force of compression of the tubular housings or of the parts of the same is instead exercised by the clamping bolts engaged with the internal threads of the tubular rivets. In this way, the clamping force of the tubular housings or of the parts of the same does not add itself to the one necessary to clamp the small driving plates, thus avoiding the excessive compression of the conveyor band.

The perfectionings of the invention are the subject of the claims below.

The features of the invention and the advantages derived from the same are better evidenced by the following description of a non limiting executive example illustrated in the attached drawings, in where:

The Fig. 1 illustrates a part of a conveyor device according to the invention in the area of the two snub pulleys.

The Fig. 2 illustrates a section according to an intermediate orthogonal, longitudinal plane of the conveyor device according to Fig. 1.

The Fig. 3 illustrates a cross-section of the conveyor device according to the preceding figures in the area of one small driving plate.

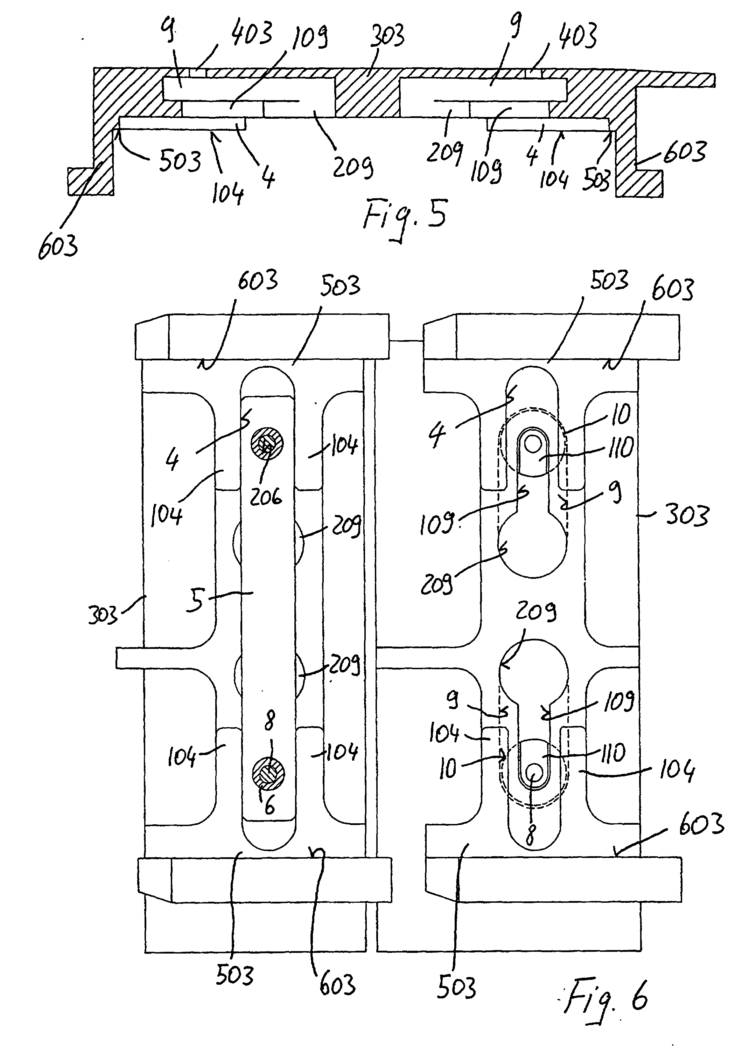

The Fig. 4 illustrates a clamping element of a half-housing to the corresponding small driving plate.

The Fig. 5 illustrates a crosssection of a part of the lower area of a half-housing.

The Fig. 6 illustrates a plan view on the bottom face of a tubular housing formed by two half-housings and the conveyor band having been omitted.

With reference to the figures, a band conveyor device for ordered groups of cigarettes, so-called box type band, is formed by a band or belt 1 closed on itself and which is driven around at least two pulleys with horizontal axis, of which at least one 2 is motortized. On the external face the band 1 carries a plurality of tubular housings 3 which are formed by two elements 103, 203 definded as half-housings and which have a cross-section in form of a C. On the internal face the band 1 has a succession of equidistant transversal ribs 101 which constitute the means of engagement with the peripheral transversal grooves 102 of the pulley or pulleys 2.

The tubular housings 3 are themselves distributed equidistant on the length of the band 1. The band 1 is made of elastic material, for example rubber or elastic plastic material which incorporates internally reinforcing elements, as for instance a plurality of small metallic cables placed side by side 301, or similar.

Each half-housing has on the face of the side bearing on the band 1, facing the actual band 1, a transversal cavity 4 which can be continuous or can be formed by only two end sections thanks to suitable projecting ribs 104. The said cavity 4 or the ribs 104 which form the end sections are oriented transversally to the longitudinal axis of the conveyor band 1 and are designed to house a continuous and transversal small plate 5 which is fixed in a preset position on the external face of the band 1. Preferably the small plate 5 is foreseen to coincide with a rib 101' on the internal face of the band 1. The rib 101' and its small driving plate 5 of the tubular housing 103, 203 have a greater length than the standard ribs of engagement 101 and in each end section extending beyond the corresponding end of the ribs of engagement 101 a through hole 401 is provided for a clamping element of the small plate 5 itself.

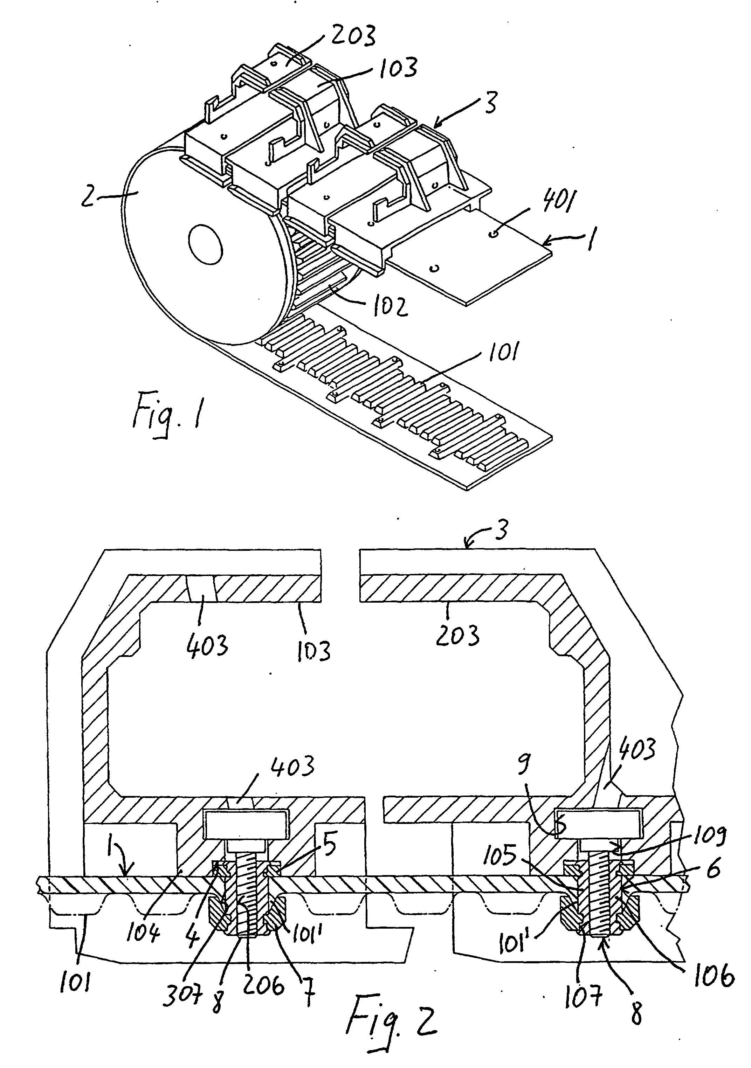

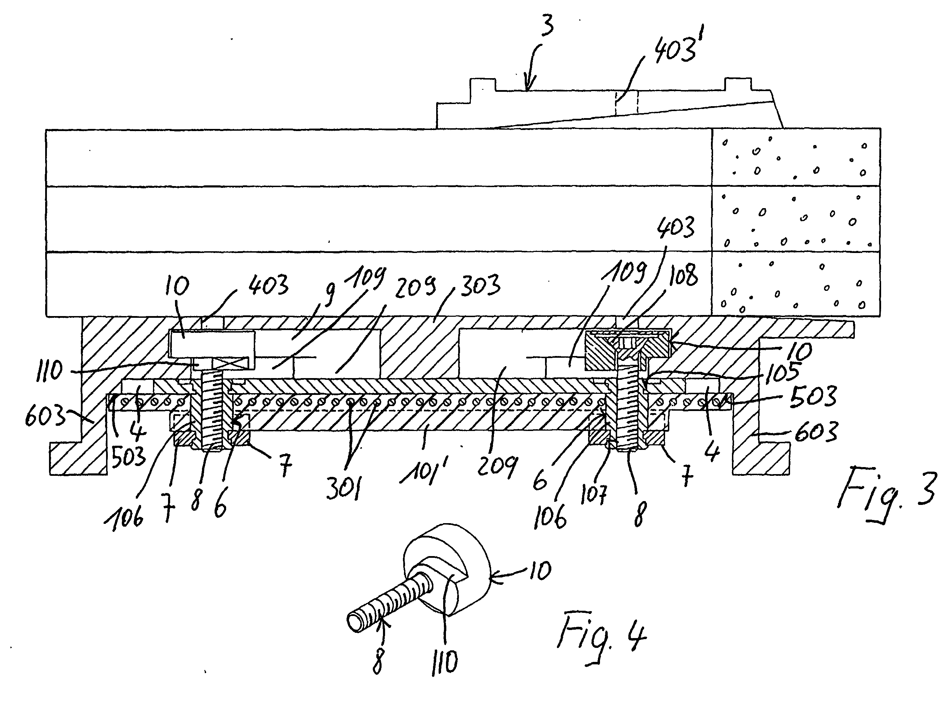

With particular reference to figures 2 and 3, each small plate 5 is clamped to the conveyor band 1 by means of tubular rivets, internally threaded indicated with 6. The tubular rivets 6 have an enlarged middle area 106, with a diameter greater than the external diameter and a wall thickness greater than the wall thickness of the extremities of the rivet 6, in the not yet deformed condition. The diameter of the central part 106 of the tubular rivet 6 is larger than the diameter of the through holes 105, 107 for the narrowed extremities to be riveted provided in the small plate 5 and small counter plate 7 respectively intended to overlap the internal face of the band 1. This in particular overlaps the rib of engagement 101' and has a transversal section with a cavity shaped to complement the transversal section of the rib of engagement 101'. Advantageously both the transversal section of the rib of engagement 101' as well as the transversal section of the cavity 307 of the small counter-plate 107 are of trapezoidal shape preferably in form of an isosceles trapeze. This structure allows to obtain a self-centering effect of the two small plates 5, 7 on the band 1.

The axial length of the enlarged central part 206 of the rivet 6 corresponds in substance to the thickness of the band 1 in the area of the hole seating the actual rivet 6 and can be slightly smaller than said thickness in order to obtain a certain compression of the band between the small driving plate 5 and the small plates 7 if so desired. In any case, the two small plates 7 and the small plate 5 abut against the facing anular shoulders of the enlarged central area 106 of the rivets 6 whereby the desired and correct clamping pressure is automatically conferred to the band during the clamping phase by means of riveting the end sections of the rivets 6, without requiring that the clamping pressure be measured each time. The small driving plates 5 and the small counterplates 7 have notches 105, 107 with one or more annular radial enlargements, in form of a step to receive the deformed extremities of the tubular rivets 6.

The seating cavities 4 , that is the terminal extremities of said cavities formed by the U shaped ribs 104, have such a width and a depth with minimum tolerances and such that the small driving plate 5 is inserted thanks to a slight shrinkage. Thanks to this expedience, the two half-housings in reality do not require a true and proper clamping but only a simple safety hold which prevents the uncoupling from the corresponding small driving plate 5. In this case, the central hole 206 of the tubular rivets is threaded, while threaded bolts 8 are foreseen as clamps to hold the half-housings 103, 203 on the small driving plate 5. In particular said bolts 8 are seated with their enlarged head 108 in a chamber 9 provided in the thickness of the coupling wall 303 of the half-housings 103, 203 engaging with the band 1. The chambers 9, one for each tubular rivet 6, are extended in a transversal direction parallel to the small driving plate 5 and have a longitudinal slot 109 on the side facing the small driving plate 5. The slot 109 coincides with the central hole 206 of the corresponding tubular rivet 6 and extends itself with one extremity in correspondence to said rivet 6 up to the opposite extremity on the side of the slot turned towards the central axis of the band 1.

In correspondence with this extremity each slot 109 has an enlargement 209 with a larger clearance than the enlarged head 108 of the bolt 8, while the slots 109 narrow towards the extremity associated with the corresponding rivet 6, thus forming a two shouldered undercut for holding the head 108 of the bolt 8.

The bolt 8 has advantageously a keyhole, not round, for the use of screwing and unscrewing means. The chamber 9 is completely closed on the side opposite to the band 1 and has only in the positions coinciding with the cavities for the heads 108 of the bolts 8 small holes 403 for introduction of the screwing and unscrewing tool.

According to a further advantageous feature, the head 108 of the bolt 8 does not engage directly with the wall of the undercut formed by the narrower section of the slot 109, but between the same and said wall an element of interposition is foreseen with the function of a washer, such element indicated with 10 has a through hole for the stem of the bolt 8 and which is enlarged on the side for seating the head 108 of the bolt or to allow for a recessed fit. The element of interposition 10 has a diameter slightly greater than the head 108 of the bolt 8, but less than the clearance of the aperture 209 of introduction into the chamber 9. On the face turned towards the groove 109, the element of interposition 10 has an axial projection 110 which is meant to engage in the slot 109. The width of the projection 110 is substantially corresponding to the one of the narrower part of the slot 109 and said projection preferably extends itself at least in part on both diametrically opposed sides of the through hole for the stem of the corresponding bolt 8. Therefore the element of interposition remains blocked with regards to a rotation around the axis of the bolt 8.

The depth of the cavity 4 or of the extremities of the cavities formed by the ribs 104 is substantially corresponding to the thickness of the small driving plate 5, while in the area of overlap at each peripheral lateral strip, the coupling wall 303 to the band 1 of each half-housing 103, 203 has a bearing projection 503 on said peripheral lateral strip of the band. Furthermore, said wall coupling with the band 1 has extensions 603 perpendicular to the plane of the band 1 which respectively overlap the lateral edge of the actual band 1, ensuring also a hold in direction of a transversal displacement of the half-housings 103, 203 relative to the band.

The particular design of the half-housings and of the clamping means of the same to the band 1, according to the invention, allows the placement of the fixing bolt in the most appropriate area independent from the morphology of the half-housings. To fix or remove the half-housings to and from the band 1 only two small holes are required for the introduction of the tools for the actual bolts. The dimensioning of the bolts 8 is very limited in as much as their function is not the one to clamp the half-housings, but only the one to hold the same in the engaged position as a matter of fit, or slight force, with the corresponding small driving plates.

Thanks to these features the clamping of the tubular housing is very rapid, easy and above all such as to avoid early wear or damage of the band because the enertia of motion of the tubular housings is only discharged to the clamping bolts.

Naturally the invention is not limited to the form of execution just now described and illustrated, but can also be amply varied above all constructively without abbandoning for this purpose the range of protection hereafter claimed.

## Claims

1. Conveyor band device for groups of delicate rodshaped objects, in particular in packing machines or similar, said device comprising:
- a continuous conveyor band (1) which rotates around snub pulleys (2), of which at least one is motorized
- a plurality of substantially tubular housings (3, 103, 203) being mounted on said band (1),
- each housing or each part of the same (3, 103, 203) has both coupling means (4, 5, 6, 7) to the band (1) in the direction of drive, that is parallel to the band, as well as separate means (6, 8, 9, 10) to hold or lock the housings or the parts of the housings (3, 103, 203) on the band (1), that is substantially in perpendicular direction to the conveyor band (1) and which are prevalently not substantially stressed in the direction of travel
**characterized by** the fact that at least one wall of continuous or discontinuous coupling (5) protrudes outwards from the external face of the conveyor *band* (1) and engages with a corresponding coupling surface (4, 104) of the tubular housing (3) or part of the same (103, 203).

2. Device according to claim 1 **characterized by** the fact that the coupling surface (4, 104, 5) extends itself over a good part of the width of the band (1) or only over part of said width and at points distanced from each other.

3. Device according to one or more of the preceding claims, **characterized by** the fact that the coupling surface (5) is constituted by a transversal drive rib, drive projection or drive tooth for each housing (3) or part of the same (103, 203), and is integral with the external surface of the conveyor band (1), while each housing or part of the same (3, 103, 203) , designed to engage with said drive projection, said drive rib or said drive tooth (5) has a complementary cavity (4, 104) for housing said drive projection, said drive rib or said drive tooth (5) which extend themselves over at least part of said drive rib, of said drive tooth, or of said drive projection (5).

4. Device according to claim 3, **characterized by** the fact that the drive tooth, drive rib, drive projection (5) or similar are made in one piece or formed by inserted elements.

5. Device according to claim 4, **characterized by** the fact that said projection, the said tooth or the said rib (5) are designed to coincide with a tooth, a projection, a rib of engagement (101'), or similar, on the internal face of the band (1), thanks to which the band 1 itself engages at least with the grooved (102) drive pulley (2).

6. Device according to one or more of the preceding claims, **characterized by** the fact that the drive tooth, the drive projection or the drive rib (5) of the tubular housing (3) or of the parts forming the same (103, 203) are inserted and are formed by a small plate of substantially rectangular shape fixed previously on the band in a preset position, in particular in a position coinciding with a drive rib, a drive tooth, a drive projection, or similar (101') on the internal face of the actual band (1), while each tubular housing or part of the same (3, 103, 203) has a cavity complementary to said small plate (4) or part of the cavity (104), on the bearing surface of the conveyor band (1) and while the clamping means (6, 206, 8, 9, 10) in perpendicular direction to the band of the tubular housings or of part of the same (3, 103, 203) are integrated with the actual small plates (5) and/or with the clamping means (6) of the same.

7. Device according to claim 6, **characterized by** the fact that the small driving plates (5) and the seating cavities (4, 104) of the same in the tubular housings (3) or in the parts forming the same (103, 203) are dimensioned in such a way and with such tolerances , whereby the small driving plate (5) engage to couple in a matter of fit, or slight force, in the associated cavities (4, 104).

8. Device according to one or more of the preceding claims, **characterized by** the fact that the clamping of the small plates (5) takes place thanks to the tubular rivets (6, 106, 206) which lock the band (1) between the small plate (5) and at least one small counter-plate (7) on the internal side of the same, preferably more small counter-plates (7), particularly at least two small counter-plates (7).

9. Device according to claim 8, **characterized by** the fact that in order to always guarentee the same force of compression of the band between the small driving plate (5) of the tubular housings (3, 103, 203) and the corresponding small counter-plates (7), the tubular rivets (6) have, in the central area , a radial anular enlargement (106) with an external diameter greater than the diameter of the through holes in the small driving plates (5) and in the small counter-plates (7), while the extremities which can be deformed by riveting and which pass through said holes are correspondingly tapered, as the internal diameter (206) is instead substantially constant, and as the the axial extension of the enlarged part (106) is substantially corresponding to the thickness of the conveyor band (1) at the clamping area of the small driving plates (5) that is slightly smaller corresponding to the desired clamping pressure.

10. Device according to one or more of the preceding claims, **characterized by** the fact that the means clamping the tubular housings. (3) or the parts of the same (103, 203) in the perpendicular direction to the conveyor band (1) are constituted by locking and holding means (206, 8, 9, 10) in the coupling position with the small driving plates (5).

11. Device according to claim 10, **characterized by** the fact that the clamping means of the tubular housings (3) or parts of the same (103, 203) are constituted by locking means of the tubular housings (3) or the parts forming the same (103, 203) acting on couplers or engagement slots (6) associated with or provided in the clamping means (6) of the same small driving plates (5).

12. Device according to claim 11, chracterized by the fact that the clamping means of the tubular housings (3) or parts of the same (103, 203) are constituted by at least one pair of threaded bolts (8) each of which engages in the central threaded hole (206) of one of the two tubular clamping rivets (6) of the corresponding small driving plate (5).

13. Device according to one or more of the preceding claims, **characterized by** the fact that the tubular housings (3) or the parts forming the same (103, 203) are shaped on the side facing the conveyor band (1) in such a way as to only present stop surfaces with the small driving plates and external lateral surfaces (603) which overlap at the corresponding lateral edges of the band (1).

14. Device according to one or more of the preceding claims, **characterized by** the fact that in correspondence of the lateral edges of the band (1), the tubular housings (3) or parts of the same (103, 203) have contact surfaces (503) with the longitudinal lateral strips of the external face of the band (1).

15. Device according to one or more of the preceding claims, **characterized by** the fact that teeth, projections or ribs (101') are provided coinciding with the small driving plates (5) also on the internal face of the conveyor band (1), while the small counter-plates (7) are shaped correspondingly (307) that is equipped with a cavity with a cross-section complementary to the one of the teeth, projections or ribs (101') on the internal face of the band (1) and with a profile suitable to eventually impart a self-centering function.

16. Device according to one or more of the preceding claims, **characterized by** the fact the clamping screws of the bolts (8) of the tubular housings (3) or of the separate parts forming the same (103), engage with seatings (9) in the bottom area of said tubular housings (3) or of the parts of the same (103, 203) which are covered towards the inside of the tubular housings (3) or of the parts corresponding to the same (103, 203) by one or more walls, possibly provided with introductory apertures (403, 403') for screwing tools.

17. Device according to claim 16, **characterized by** the fact that for each bolt (8) a through aperture of engagement is provided which consists of a slot (109) transversal and parallel to the axis of the 5 small driving plate (5), and said slot (109) leading into the chamber (9) provided in the thickness of the wall (303) of the tubular housing (3) or of the parts forming the same (103, 203) on the side of the conveyor band (1) and said slot (109) having in an offset position with regards to the threaded hole (206) of the tubular rivet (6) an enlarged extremity (209) for introduction of the enlarged head (108) of the screw or the bolt (8), while it narrows in direction of the other extremity coinciding with the threaded hole (206) of the tubular rivet (6), forming an undercut retaining wall in which engages the head (108) of the screw, the bolt, or similar (8).

18. Device according to claim 17, **characterized by** the fact that the head (108) of the screw or the bolt (8) is of the so-called socket head, that is it has an coaxial cavity, not round, to engage a screwing tool, which cavity is accessible from the outside of the chamber (9) for the head (108) through a small hole (403, 403') coinciding with the same and provided in the wall or walls which overlap from the ouside of the said screw or said bolt (8).

19. Device according to claims 17 or 18, **characterized by** the fact that the head (108) of the screw or the bolt (8) does not engage directly with the undercut retaining wall which delimits laterally the narrowed area of the slot (109), but through an element of interposition (10) with the function of a washer, or similar, which has a diameter substantially corresponding to the one of the head (108) of the screw or bolt (8), preferably slightly larger than the one of the head (108) but smaller than the aperture of introduction to the chamber (9) and which is equipped with a central hole or cavity of engagement for the head (108) of the screw (8), as well as for an anti-rotation appendix (110), not round, on the opposite side, in form of a diametral or radial rib which has a width substantially corresponding to the width of the narrowed part of the slot (109) and which is meant to engage in the same clamping position of the tubular housing (3) or the corresponding parts of the same (103, 203).

## Patentansprüche

1. Förderbandeinrichtung für empfindliche stabförmige Gegenstände, insbesondere in Verpackungsmaschinen oder dergleichen umfassend:
ein kontinuierliches Förderband (1) das um Ablenktrommeln (2) rotiert, von denen zumindest eine angetrieben ist,
eine Vielzahl von im wesentlichen röhrenförmigen Gehäusen (3, 103, 203), die auf das Förderband (1) montiert sind,
jedes Gehäuse oder Teil davon (3, 103, 203) hat sowohl Verbindungsmittel (4, 5, 6, 7) zum Förderband (1) in der Richtung des Antrieb, also parallel zum Band, als auch getrennte Verbindungsmittel (6, 8, 9, 10) zum Befestigen oder Arretieren der Gehäuse oder deren Teile (3, 103, 203) auf dem Band, also überwiegend in senkrechter Richtung zum Förderband (1) und die vorherrschenderweise nicht wesentlich in Bewegungsrichtung belastet sind,
**dadurch gekennzeichnet, dass**
wenigstens eine Wand der kontinuierlichen oder diskontinuierlichen Verbindung (5) auswärts hinausragt von der äußeren Seite des Förderbandes (1) und in eine korrespondierende Kupplungsoberfläche (4, 104) des röhrenförmigen Gehäuses (3) oder dessen Teile (103, 203) eingreift.

2. Förderbandeinrichtung gemäß Anspruch 1, **dadurch gekennzeichnet, dass** sich die Kupplungsoberfläche (4, 104, 5) über ein gutes Stück der Breite des Bandes (1) erstreckt oder an zueinander beabstandeten Punkten nur über einen Teil der besagten Breite.

3. Förderbandeinrichtung nach einem oder mehreren der vorhergehenden Ansprüche, **dadurch gekennzeichnet, dass** die Kupplungsoberfläche (5) durch eine in die äußere Oberfläche des Förderbandes (1) integrierte transversale Treibrippe, Treibvorsprung oder Treibzahn für jedes Gehäuse (3) oder dessen Teile (103, 203) gebildet wird, während jedes, zum Eingreifen in die Treibrippe, Treibvorsprung oder Treibzahn (5) vorgesehene Gehäuse oder dessen Teile (3, 103, 203) einen komplementären Hohlraum (4, 104) zur Aufnahme besagter Treibrippe, besagtem Treibvorsprung oder besagtem Treibzahn (5) aufweist, der sich zumindest über einen Teil der besagten Treibrippe, Treibvorsprung oder Treibzahn erstreckt.

4. Förderbandeinrichtung nach Anspruch 3, **dadurch gekennzeichnet, dass** Treibzahn, Treibrippe, Treibvorsprung oder ähnliches aus einem Stück bestehen oder durch eingesetzte Elemente gebildet sind.

5. Vorrichtung nach Anspruch 4, **dadurch gekennzeichnet, dass** besagter Vorsprung, besagter Zahn oder die besagte Rippe (5) ausgelegt sind um mit einem Zahn, einem Vorsprung, einer Verbindungsrippe (101'), oder ähnlichem auf der inneren Seite des Bandes (1) zusammenzutreffen, dank derer das Band (1) zumindest in die gekerbten Antriebstrommel eingreift.

6. Vorrichtung nach einem oder mehreren der vorhergehenden Ansprüche, **dadurch gekennzeichnet, dass** der Triebzahn, der Triebvorsprung oder die Treibrippe (5) des röhrenförmigen Gehäuses (3) oder der dieses formenden Teile (103, 203), eingefügt sind und gebildet werden durch eine kleine Platte überwiegend rechtwinkliger Form, die zuvor in einer vorgegebenen Position auf dem Band fixiert wurde, insbesondere in einer Position, die mit einer Treibrippe, einem Treibzahn einem Treibvorsprung oder ähnlichem (101') auf der Innenseite des Bandes (1) zusammentrifft, während jedes röhrenförmige Gehäuse oder dessen Teile (3, 103, 203) einen zur besagten kleinen Platte (4) komplementären Hohlraum oder Teil des Hohlraumes (104) auf der tragenden Oberfläche des Förderbandes (1) aufweist, und während die Klemmmittel (6, 206, 8, 9, 10) der röhrenförmigen Gehäuse oder deren Teile (3, 103, 203) in senkrechter Richtung zum Band in die kleine Platte (5) und/oder in deren Klemmmittel (6) integriert sind.

7. Vorrichtung gemäß Anspruch 6, **dadurch gekennzeichnet, dass** die kleinen Triebplatten (5) und deren Aufnahmehohlräume (4, 104) in den röhrenförmigen Gehäusen oder deren Teile (3, 103, 203) so dimensioniert und mit solchen Toleranzen versehen sind, dass die kleine Triebplatte (5) passend oder mit leichter Kraft in die assoziierten Hohlräume (4, 104) verbindend eingreift.

8. Vorrichtung gemäß einen oder mehreren der vorhergehenden Ansprüche, **dadurch gekennzeichnet, dass** die Klemmung der kleinen Platten (5) aufgrund der röhrenförmigen Nieten (6, 106, 206) erfolgt, die das Band (1) zwischen der kleinen Platte (5) und zumindest einer kleinen Gegenplatte (7) auf dessen Innenseite, vorzugsweise mehreren kleinen Gegenplatten (7), insbesondere wenigstens zwei kleinen Gegenplatten (7) arretiert.

9. Vorrichtung gemäß Anspruch 8, **dadurch gekennzeichnet, dass** die röhrenförmigen Nieten (6) in der Zentralfläche eine radiale ringförmige Vergrößerung (106) mit einem äußeren Durchmesser aufweisen, der größer als der Durchmesser der Durchbohrungen in den kleinen Triebplatten (5) und Gegenplatten (7) ist, um stets die gleiche Anpresskraft des Bandes zwischen der kleinen Triebplatte (5) der röhrenförmigen Gehäuse (3, 103, 203) und der korrespondierenden Gegenplatte (7) sicherzustellen, während die Bereiche, die beim Nieten verformt werden können und die durch die genannten Durchbohrungen reichen, entsprechend verjüngt sind, da der innere Durchmesser (206) im Gegensatz dazu überwiegend konstant ist, und da die axiale Ausdehnung des vergrößerten Bereiches (106) überwiegend zur Dicke des Förderbandes (1) im Klemmbereich der kleinen Triebplatten (5) korrespondiert, die geringfügig kleiner ist entsprechend dem gewünschten Klemmdruck.

10. Vorrichtung nach einem oder mehreren der vorherigen Ansprüche, **dadurch gekennzeichnet, dass** die, die röhrenförmigen Gehäuse (3) oder deren Teile (103, 203) in der senkrechten Richtung auf das Förderband (1) klemmenden, Mittel aus verriegelnden und haltenden Mitteln (206, 8, 9, 10) in der koppelnden Position mit den kleinen Triebplatten (5) bestehen.

11. Vorrichtung nach Anspruch 10, **dadurch gekennzeichnet, dass** die Klemmmittel der röhrenförmigen Gehäuse (3) oder deren Teile (103, 203) aus Verriegelungsmitteln der röhrenförmigen Gehäuse (3) oder deren Teile (103, 203) bestehen, die auf Koppler oder Eingreifschlitze (6) einwirken, die mit den Klemmmitteln (6) der gleichen kleinen Triebplatte (5) assoziiert oder dort vorgesehen sind.

12. Vorrichtung nach Anspruch 11, **dadurch gekennzeichnet, dass** die Klemmmittel der röhrenförmigen Gehäuse (3) oder deren Teile (103, 203) aus wenigstens einem Paar Gewindebolzen (8) bestehen, von denen jeder in die zentrale Gewindebohrung (206) von einem der beiden röhrenförmigen Klemmnieten (6) der korrespondierenden kleinen Triebplatte (5) eingreift.

13. Vorrichtung nach einem oder mehreren der vorherigen Ansprüche, **dadurch gekennzeichnet, dass** die röhrenförmigen Gehäuse (3) oder deren Teile (103, 203) auf der dem Förderband (1) zugewandten Seite so geformt sind, dass sie nur Stop-Oberflächen für die kleinen Triebplatten und externe Seitenoberflächen (603) zeigen, die die korrespondierenden Seitenkanten des Bandes (1) überlappen.

14. Vorrichtung nach einem oder mehreren der vorherigen Ansprüche, **dadurch gekennzeichnet, dass** die röhrenförmigen Gehäuse (3) oder deren Teile (103, 203), in Abhängigkeit von den Seitenkanten des Bandes (1), Kontaktoberflächen (503) zu den seitlichen Längsrändern der Außenseite des Bandes (1) aufweisen.

15. Vorrichtung nach einem oder mehreren der vorherigen Ansprüche, **dadurch gekennzeichnet, dass** Zähne, Vorsprünge oder Rippen (101') vorgesehen sind, die auch auf der Innenseite des Förderbandes (1) mit den kleinen Triebpfatten (5) übereinstimmen, während die kleinen Gegenplatten (7) entsprechend geformt sind (307), also ausgestattet sind mit einem Hohlraum mit einem Durchmesser komplementär zu dem der Zähne, Vorsprünge oder Rippen (101') auf der Innenseite des Bandes (1) und mit einem Profil versehen sind, dass schließlich eine selbstzentrierende Funktion gewährt.

16. Vorrichtung nach einem oder mehreren der vorherigen Ansprüche, **dadurch gekennzeichnet, dass** die Klemmschrauben der Bolzen (8) der röhrenförmigen Gehäuse (3), oder der diese formenden Einzelteile (103), in Sitze (9) im Bodenraum der Gehäuse (3) oder deren Teile (103, 203) eingreifen, die in Richtung des Inneren der Gehäuse (3) oder deren Teile (103, 203) durch eine oder mehrere Wände abgedeckt sind, die Einlassöffnungen (403, 403') für Schraubwerkzeuge aufweisen können.

17. Vorrichtung nach Anspruch 16, **dadurch gekennzeichnet, dass** für jeden Bolzen (8) eine Eingreif-Durchlassöffnung vorgesehen ist, bestehend aus einem querverlaufenden und zur Achse der kleinen Triebplatte (5) parallelen Schlitz (109), wobei der Schlitz (109) in eine in der Wandstärke (303) des Gehäuses (3) oder dessen Teile (103, 203) vorgesehenen Kammer (9) auf der Seite des Förderbandes (1) führt, und wobei der Schlitz (109) in einer, im Hinblick auf die Gewindebohrung (206) der röhrenförmigen Niet (6), entfernten Position einen vergrößerten Bereich zur Einführung des vergrößerten Kopfes (108) der Schraube oder des Bolzens (8) aufweist, während er sich in Richtung der anderen, mit der Gewindebohrung (206) des röhrenförmigen Nietes (6) übereinstimmenden Position, verkleinert, wobei er eine Unterschneidungsschutzwand bildet, in die der Kopf (108) der Schraube, des Bolzens oder ähnliches eingreift.

18. Vorrichtung gemäß Anspruch 17, **dadurch gekennzeichnet, dass** der Kopf (8) der Schraube oder des Bolzens (108) ein sogenannter Inbuskopf ist, das heißt, er weist eine nicht runde, koaxiale Vertiefung als Ansatzpunkt für ein Schraubwerkzeug auf, wobei die Vertiefung von außerhalb der Kammer (9) durch eine kleine mit der Vertiefung übereinstimmende Öffnung (403, 403') zugänglich ist, die in der Wand oder den Wänden vorgesehen ist, die die Schraube oder den Bolzen (8) von außen überlappen.

19. Vorrichtung gemäß einer der Ansprüche 17 oder 18 **dadurch gekennzeichnet, dass** der Kopf (108) der Schraube oder des Bolzens (8) nicht direkt in die Unterschneidungsschutzwand, die die eingeengte Fläche des Schlitzes (109) seitlich begrenzt, eingreift, sondern vielmehr durch ein Zwischenelement (10) mit der Funktion einer Unterlegscheibe oder ähnlichem, das einen Durchmesser aufweist, der vorwiegend demjenigen des Kopfes (108) der Schraube oder des Bolzens (8) entspricht, vorzugsweise etwas größer als der des Kopfes (108) aber kleiner als die Einführöffnung in die Kammer (9) und das ausgestattet ist mit einem zentralen Loch oder Eingreifhohlraum für den Kopf (108) der Schraube (8) und für einen gegenüberliegenden unrunden Antirotationszusatz (110) in Form einer radialen oder diametralen Rippe, deren Durchmesser im wesentlichen dem Durchmesser des verengten Abschnittes des Schlitzes (109) entspricht und die dazu vorgesehen ist, in die gleiche Klemmposition des röhrenförmigen Gehäuses (3) oder dessen Teile (103, 203) einzugreifen.

## Revendications

1. Dispositif à bande transporteuse pour groupes d'objets délicate en forme de tige, en particulier dans des machines d'emballage ou analogues, ledit dispositif comprenant :
- une bande transporteuse (1) continue qui tourne autour de tambours de contrainte (2) dont au moins l'un est entraîné par moteur,
- plusieurs boîtiers (3, 103, 203) sensiblement tubulaires qui sont montés sur ladite bande (1),
- chaque boîtier ou chaque partie de celui-ci (3, 103, 203) comportant à la fois des moyens (4, 5, 6, 7) d'accouplement à la bande (1) dans la direction d'entraînement, laquelle est parallèle à la bande, et des moyens séparés (6, 8, 9, 10) servant à maintenir ou bloquer les boîtiers ou les parties des boîtiers (3, 103, 203) sur la bande (1), à savoir sensiblement suivant la direction perpendiculaire à la bande transporteuse (1) et qui, d'une manière prédominante, ne sont pas sensiblement soumis à une contrainte dans la direction de déplacement, **caractérisé par le fait qu'**au moins une paroi d'accouplement (5) de type continu ou discontinu fait saillie vers l'extérieur à partir de la face extérieure de la bande transporteuse (1) et coopère avec une surface d'accouplement (4, 104) correspondante du boîtier tubulaire (3) ou d'une partie de celui-ci (103, 203).

2. Dispositif suivant la revendication 1, **caractérisé par le fait que** la surface d'accouplement (4, 104, 5) s'étend sur une bonne partie de la largeur de la bande (1) ou seulement sur une partie de ladite largeur et en des points espacés l'un de l'autre.

3. Dispositif suivant une ou plusieurs des revendications précédentes, **caractérisé par le fait que** la surface d'accouplement (5) est constituée par une nervure d'entraînement, saillie d'entraînement ou dent d'entraînement, transversale, pour chaque boîtier (3) ou partie de celui-ci (103, 203), et est d'une pièce avec la surface extérieure de la bande transporteuse (1), tandis que chaque boîtier ou partie de celui-ci (3, 103, 203), conçu pour coopérer avec ladite saillie d'entraînement, ladite nervure d'éntraînement ou ladite dent d'entraînement (5), comporte une cavité (4, 104) complémentaire servant à loger ladite saillie d'entraînement, ladite nervure d'entraînement ou ladite dent d'entraînement (5), lesquelles s'étendent sur au moins une partie de ladite nervure d'entraînement, de ladite dent d'entraînement ou de ladite saillie d'entraînement (5).

4. Dispositif suivant la revendication 3, **caractérisé par le fait que** la dent d'entraînement, nervure d'entraînement, saillie d'entraînement (5) ou analogue est réalisée d'une pièce ou formée d'élémenta insérés.

5. Dispositif suivant la revendication 4, **caractérisé par le fait que** ladite saillie, ladite dent ou ladite nervure (5) est conçue pour coïncider avec une dent, une saillie, une nervure de coopération (101') ou analogue, située sur la face intérieure de la bande (1), grâce à laquelle la bande (1) elle-même coopère au moins avec le tambour d'entraînement (2) cannelé (102).

6. Dispositif suivant une ou plusieurs des revendications précédentes, **caractérisé par le fait que** la dent d'entraînement, la saillie d'entraînement ou la nervure d'entraînement (5) du boîtier tubulaire (3) ou des parties formant celui-ci (103, 203) est insérée et est formée par une petite plaque de forme sensiblement rectangulaire fixée au préalable sur la bande dans une position préfixée, en particulier dans une position coïncidant avec une nervure d'entraînement, une dent d'entraînement, une saillie d'entraînement ou analogue (101') située sur la face intérieure de la bande actuelle (1), tandis que chaque boîtier tubulaire ou partie de celui-ci (3, 103, 203) comporte une cavité complémentaire de ladite petite plaque (4) ou partie de la cavité (104), située sur la surface d'appui de la bande transporteuse (1), et que les moyens de serrage (6, 206, 8, 9, 10), suivant la direction perpendiculaire à la bande, des boîtiers tubulaires ou d'une partie de ceux-ci (3, 103, 203) sont intégrés avec les petites plaques actuelles (5) et/ou avec les moyens de serrage (6) de celle-ci.

7. Dispositif suivant la revendication 6, **caractérisé par le fait que** les petites plaques d'entraînement (5) et les cavités de logement (4, 104) de celles-ci situées dans les boîtiers tubulaires (3) ou dans les parties formant ceux-ci (103, 203) sont dimensionnées d'une manière telle, et avec des tolérances telles, que la petite plaque d'entraînement (5) coopère de façon à s'accoupler avec ajustement, ou une légère force, dans les cavités (4, 104) associées.

8. Dispositif suivant une ou plusieurs des revendications précédentes, **caractérisé par le fait que** le serrage des petites plaques (5) a lieu grâce aux rivets tubulaires (6, 106, 206) qui bloquent la bande (1) entre la petite plaque (5) et au moins une petite contre-plaque (7) située sur la face intérieure de celle-ci, de préférence un plus grand nombre de petites contre-plaques (7), en particulier au moins deux petites contre-plaques (7).

9. Dispositif suivant la revendication 8, **caractérisé par le fait qu'**afin de toujours garantir la même force de compression de la bande entre la petite plaque d'entraînement (5) des boîtiers tubulaires (3, 103, 203) et les petites contre-plaques (7) correspondantes, les rivets tubulaires (6) comportent, dans la zone centrale, un élargissement annulaire radial (106) ayant un diamètre extérieur supérieur au diamètre des trous traversants ménagés dans les petites plaques d'entraînement (5) et dans les petites contre-plaques (7), tandis que les extrémités qui peuvent être déformées par rivetage et qui traversent lesdits trous sont convergentes d'une manière correspondante, alors que le diamètre intérieur (206) est au contraire sensiblement constant, et alors que l'étendue axiale de la partie élargie (106) est sensiblement correspondante à l'épaisseur de la bande transporteuse (1) à l'endroit de la zone de serrage des petites plaques d'entraînement (5) qui est légèrement plus petite d'une manière correspondant à la pression de serrage voulue.

10. Dispositif suivant une ou plusieurs des revendications précédentes, **caractérisé par le fait que** les moyens serrant les boîtiers tubulaires (3) ou les parties de ceux-ci (103, 203) suivant la direction perpendiculaire à la bande transporteuse (1) sont constitués par des moyens de blocage et de maintien (206, 8, 9, 10) dans la position d'accouplement avec les petites plaques d'entraînement (5).

11. Dispositif suivant la revendication 10, **caractérisé par le fait que** les moyens de serrage des boîtiers tubulaires (3) ou parties de ceux-ci (103, 203) sont constitués par des moyens de blocage des boîtiers tubulaires (3) ou des parties formant ceux-ci (103, 203)' jouant le rôle de coupleurs ou de fentes de coopération (109) associés aux, ou prévus dans, les moyens de serrage (6) des petites plaques d'entraînement (5).

12. Dispositif suivant la revendication 11, **caractérisé par le fait que** les moyens de serrage des boîtiers tubulaires (3) ou parties de ceux-ci (103, 203) sont constitués par au moins une paire de boulons filetés (8) dont chacun se visse dans le trou fileté (206) central de l'un des deux rivets de serrage tubulaires (6) de la petite plaque d'entraînement (5) correspondante.

13. Dispositif suivant une ou plusieurs des revendications précédentes, **caractérisé par le fait que** les boîtiers tubulaires (3) ou les parties formant ceux-ci (103, 203) sont formés sur le côté faisant face à la bande transporteuse (1) de manière à ne présenter que des surfaces de butée avec les petites plaques d'entraînement et des surfaces latérales extérieures (603) qui chevauchent les bords latéraux correspondants de la bande (1).

14. Dispositif suivant une ou plusieurs des revendications précédentes, **caractérisé par le fait qu'**en correspondance des bords latéraux de la bande (1), les boîtiers tubulaires (3) ou parties de ceux-ci (103, 203) présentent des surfaces de contact (503) avec les bandes latérales longitudinales de la face extérieure de la bande (1).

15. Dispasitif suivant une ou plusieurs des revendications précédentes, **caractérisé par le fait qu'**il est prévu des dents, saillies ou nervures (101') coïncidant avec les petites plaques d'entraînement (5) également sur la face intérieure de la bande transporteuse (1), tandis que les petites contre-plaques (7) sont conformées d'une manière correspondante (307) qui est pourvue d'une cavité ayant une section transversale complémentaire de celle des dents, saillies ou nervures (101') situées sur la face intérieure de la bande (1) et avec un profil convenant pour impartir finalement une fonction d'auto-centrage.

16. Dispositif suivant une ou plusieurs des revendications précédentes, **caractérisé par le fait que** les vis de serrage ou boulons (8) des boîtiers tubulaires (3) ou des parties séparées formant ceux-ci (103) coopèrent avec des logements (9) ménagés dans la zone inférieure desdits boîtiers tubulaires (3) ou des parties de ceux-ci (103, 203) qui sont couverte vers l'intérieur des boîtiers tubulaires (3) ou des parties correspondant à ceux-ci (103, 203) par une ou plusieurs parois, éventuellement pourvues d'ouvertures d'introduction (403, 403') pour des outils de vissage.

17. Dispositif suivant la revendication 16, **caractérisé par le fait que**, pour chaque boulon (8), il est prévu une ouverture traversante de coopération qui consiste en une fente (109) transversale et parallèle à l'axe de la petite plaque d'entraînement (5), et ladite fente (109) débouchant dans la chambre (9) ménagée dans l'épaisseur de la paroi (303) du boîtier tubulaire (3) ou des parties formant celui-ci (103, 203) sur le côté de la bande transporteuse (1) et ladite fente (109) présentant, dans une position décalée vis-à-vis du trou fileté (206) du rivet tubulaire (6), une extrémité élargie (209) pour l'introduction de la tête élargie (108) de la vis ou du boulon (8), tandis qu'elle devient plus étroite en direction de l'autre extrémité en coincidant avec le trou fileté (206) du rivet tubulaire (6), en formant une paroi de retenue en contre-dépouille dans laquelle s'engage la tête (108) de la vis, du boulon ou analogue (8).

18. Dispositif suivant la revendication 17, **caractérisé par le fait que** la tête (108) de la vis ou du boulon (8) est ce qu'il est convenu d'appeler une tête à six-pans creux, ce qui signifie qu'elle comporte une cavité coaxiale, non circulaire, pour coopérer avec un outil de vissage, laquelle cavité est accessible de l'extérieur de la chambre (9) pour la tête (108) à travers un petit trou (403, 403') coïncidant avec celle-ci et ménagé dans la paroi ou les parole qui chevauchent de l'extérieur de ladite vis ou dudit boulon (8).

19. Dispositif suivant les revendications 17 ou 18, **caractérisé par le fait que** la tête (108) de la vis ou du boulon (8) ne coopère pas directement avec la paroi de retenue en contre-dépouille qui délimite latéralement la zone plus étroite de la fente (109), mais par l'intermédiaire d'un élément d'interposition (10) ayant la fonction d'une rondelle, ou analogue, qui a un diamètre correspondant sensiblement à celui de la tête (108) de la vis ou du boulon (8), de préférence légèrement supérieur à celui de la tête (108), mais plus petit que l'ouverture d'introduction à la chambre (9), et qui est pourvu d'un trou central ou cavité de coopération pour la tête (108) de la vis (8), ainsi que pour un appendice anti-rotation (110), non circulaire, situé du côté opposé, ayant la forme d'une nervure diamétrale ou radiale qui a une largeur correspondant sensiblement à la largeur de la partie plus étroite de la fente (109) et qui est destinée à coopérer dans la même position de serrage du boîtier tubulaire (3) ou des parties correspondantes de celui-ci (103, 203).
